# EUROPÄISCHE PATENTSCHRIFT

(11) **EP 3 765 750 B1**
(45) Veröffentlichungstag und Bekanntmachung des Hinweises auf die Patenterteilung: **01.05.2024**
(21) Anmeldenummer: 19714147.6
(22) Anmeldetag: 21.03.2019
(51) Int. Cl.: F16B 5/02

(54) **EIN VERBINDUNGSELEMENT MIT AUSSENHÜLSE SOWIE ENTSPRECHENDE VERBINDUNGS- UND HERSTELLUNGSVERFAHREN**
CONNECTION ELEMENT COMPRISING AN OUTER SLEEVE, AND CORRESPONDING CONNECTION AND MANUFACTURING METHOD
RACCORD MUNI D'UNE DOUILLE EXTÉRIEURE, AINSI QUE PROCÉDÉ ASSOCIÉ DE RACCORDEMENT ET DE FABRICATION

(30) Priorität: 11.04.2018 DE 102018108633
(43) Veröffentlichungstag der Anmeldung: 20.01.2021
(73) Patentinhaber: Böllhoff Verbindungstechnik GmbH, 33649 Bielefeld (DE)
(72) Erfinder: FIGGE, Hans-Ulrich, 33758 Schloß Holte - Stukenbrock (DE); BURGER, Ingo, 33758 Schloß Holte-Stukenbrock (DE)
(74) Vertreter: HWP Intellectual Property
(86) Internationale Anmeldenummer: PCT/EP2019/057153
(87) Internationale Veröffentlichungsnummer: WO 2019/197131

(56) Entgegenhaltungen:
- WO-A2-2009/030480
- DE-A1- 4 131 779
- DE-A1-102016 112 014
- US-A- 4 521 004

## Beschreibung

### 1. Gebiet der Erfindung

Die vorliegende Erfindung betrifft ein Verbindungselement, mit dem mindestens ein erstes Bauteil und ein zweites Bauteil über eine Schraubverbindung verbindbar sind sowie entsprechende Verbindungs- und Herstellungsverfahren.

### 2. Hintergrund der Erfindung

Aus DE GM 90 01 069.8 ist eine Blindnietmutter bekannt, die aus einem elastischen Außenkörper und einem metallischen Gewindeeinsatz besteht. Der elastische Außenkörper hat einen in ein Befestigungsloch eines Trägerteils einsteckbaren hülsenförmigen Schaft mit einem Befestigungsflansch und einer Faltzone, die zu einem einen Schließkopf bildenden Stauchwulst faltbar ist, so dass die Blindnietmutter einerseits durch den Befestigungsflansch und andererseits durch den Stauchwulst an dem Befestigungsteil festgelegt wird. Bei der vorbekannten Blindnietmutter ist die Gewindebuchse in ein Gewindeelement und eine Abstandshülse unterteilt, wobei sich die Abstandshülse am Ende des Faltvorganges an die Unterseite des Befestigungsteiles anlegt. Es sind auch Ausführungsformen bekannt, bei denen die Gewindebuchse einstückig ausgebildet ist.

EP 1 710 454 B1 offenbart einen Blindniet für eine Schraubverbindung zwischen einem Trägerbauteil und einem Befestigungsteil. Dieser Blindniet besteht aus einem elastischen Außenkörper mit einem in ein Befestigungsloch des Trägerteils einsteckbaren hülsenförmigen Schaft, der einen Befestigungsflansch und eine zu einer Stauchwulst faltbare Faltzone aufweist, welche auf gegenüberliegenden Seiten des Trägerteils abstützbar sind. Zudem weist der Blindniet eine metallische Buchse auf, die innerhalb des Außenkörpers angeordnet ist. Der beispielsweise aus einem thermo-plastischen Elastomer bestehende Außenkörper wird die Buchse umgebend spritzgegossen. Während dieses Vorgangs wird ein Verankerungsvorsprung des Außenkörpers erzeugt, der in einen ringförmigen Einstich des Verankerungsabschnitts der Buchse eingreift. Auf diese Weise bilden der Außenkörper und die im Inneren angeordnete Buchse eine formschlüssige Verbindung. Wird der Blindniet innerhalb einer Schraubverbindung axial komprimiert, bildet sich die Faltwulst in der Faltzone aus.

Ein Befestiger mit Dämpfungsfunktion, mit dem mindestens ein erstes und ein zweites Bauteil über eine Schraubverbindung verbindbar sind, ist in DE 10 2016 112 014 A1 beschrieben. Der Befestiger besteht aus den folgenden Komponenten: einer elastisch verformbaren Außenhülse, einer darin angeordnete Stützhülse sowie eine in der Außenhülse angeordnete Schraubhülse mit Teleskopbereich. Beim Herstellen der Verbindung zwischen den beiden Bauteilen faltet sich die Außenhülse, wobei die Stützhülse und die Schraubhülse ineinander geschoben werden.

Den oben beschriebenen Verbindungselementen ist gemeinsam, dass die Außenhülse im Trägerbauteil und das Befestigungsteil benachbart zum Befestigungsflansch angeordnet werden. Ein Nachteil bei nur einseitiger Zugänglichkeit der zu verbindenden Bauteile ist daher, dass in der Außenhülse bereits ein Gewinde vorgesehen sein muss, das mit der Schraube zusammenwirkt. Ein weiterer Nachteil dieser Verbindungselemente ist, dass gerade bei einer Vielzahl an Verbindungspunkten zwischen dem ersten und dem zweiten Bauteil deutlich wird, dass ein radialer Toleranzausgleich nicht oder nur schwer realisierbar ist.

DE 37 84 325 T2 beschreibt eine Befestiger-Zusammensetzung zur Verwendung in Verbindung mit einem ersten und einem zweiten Bauteil, die jeweils mit einer Öffnung versehenen sind. Die Befestiger-Zusammensetzung umfasst einen Befestiger, eine Scheibe und eine Durchführung aus einem elastischen Material. Der Befestiger weist einen Kopf und ein Schaft auf, wobei der Schaft einen oberen gewindefreien Schaftabschnitt, einen unteren mit Gewinde versehenen Schaftabschnitt und hervorstehende Mittel aufweist, die zwischen dem oberen gewindefreien Schaftabschnitt und dem unteren mit Gewinde versehenen Schaftabschnitt angeordnet sind. Die Durchführung und die Scheibe sind dem Befestiger teleskopartig zugeordnet. Mit dieser Anordnung wird eine Befestiger-Zusammensetzung bereitgestellt, die ein deutliches axiales Spiel zwischen dem Befestiger und der Scheibe aufweist. Zudem kann die Befestiger-Zusammensetzung so in einem ersten Bauteil montiert werden, dass der Befestiger aus der Unterseite des ersten Werkstücks nicht hervorsteht. Ein Nachteil dieser Befestiger-Zusammensetzung ist, dass kein radialer Toleranzausgleich realisierbar ist.

Ein Montageteil mit einem schwingungsgedämpften Befestigungsloch ist schließlich in DE 196 54 848 A1 beschrieben. Eine Manschette aus gummielastischem Material liegt mit einem Manschettenhals von etwa zylindrischer Umfangsform im Befestigungsloch ein und ist von einer in ihrem Durchgangsloch einliegenden Montagehülse durchsetzt und unmittelbar oder mittelbar von einem kopfseitigen Ringkragen der Montagehülse oder dem Schraubenkopf einer mit ihrem Schaft in der Montagehülse einliegenden Schraube in Anzugsrichtung beaufschlagt. Das Montageteil weist im Bereich seines Befestigungsloches eine Hinterschneidung auf, die einen Bereich des Manschettenhalses, nämlich dessen Fixierbereich, flankiert. Die dem Fixierbereich zugeordnete Innenwand des Durchgangsloches verjüngt sich in Anzugsrichtung zum Halsende hin etwa nach Art eines Trichters. Der Mantel der Montagehülse ist von solchem Durchmesser und solcher Umfangsform, dass er beim Durchtritt durch den Hintergriffbereich diesen in radialer Richtung derart aufweitet, dass er einerseits die Hinterschneidung im Bereich des Befestigungsloches hintergreift und andererseits aufgrund elastischer Rückstellkräfte innerhalb der Manschette fixiert ist. Auch mit dieser Anordnung sind radiale Toleranzen zwischen den Verbindungspunkten von zwei Bauteilen nicht ausgleichbar.

Ein Befestiger mit Dämpfungsfunktion zum Verbinden eines ersten und eines zweiten Bauteils sowie ein Verfahren zu seiner Herstellung ist in WO 2009/030480 A2 beschrieben. Der Befestiger zeichnet sich durch die folgenden Merkmale aus: eine Schraube mit Schraubenschaft, Schraubenkopf und Gewindebereich, auf der eine Scheibe unverlierbar angeordnet ist, eine Stützhülse, mit der der Befestiger auf dem zweiten Bauteil abstützbar ist, und eine Dämpfungshülse, in der die Stützhülse aufgenommen ist und die einen über die Stützhülse hinausragenden Bund umfasst, an dem die Scheibe befestigt ist.

Die Aufgabe der vorliegenden Erfindung ist daher, die obigen Nachteile zu beseitigen und eine Außenhülse eines Verbindungselements ohne weibliches Gewinde mit Dämpfungsfunktion bereitzustellen, mit der gerade bei einer Vielzahl von Verbindungspunkten die Montage erleichtert ist, insbesondere im Hinblick auf einen Ausgleich von radialen Toleranzen. Ebenso ist es eine Aufgabe der vorliegenden Erfindung, ein entsprechendes Verbindungselement sowie die dazugehörigen Verbindungs- und Herstellungsverfahren bereitzustellen.

### 3. Zusammenfassung der Erfindung

Die obige Aufgabe wird gelöst durch ein Verbindungselement ohne weibliches Gewinde mit Dämpfungsfunktion, mit dem mindestens ein erstes Bauteil und ein zweites Bauteil über eine Schraubverbindung verbindbar sind, gemäß dem unabhängigen Patentanspruch 1, eine erstes Bauteil mit Verbindungselement gemäß Patentanspruch 7, eine Verbindung zwischen zwei Bauteilen mittels eines Verbindungselements gemäß Patentanspruch 8, ein Verbindungsverfahren eines ersten Bauteils mit einem zweiten Bauteil mittels eines Verbindungselements gemäß dem unabhängigen Patentanspruch 9 oder 10 sowie ein Herstellungsverfahren eines Verbindungselements gemäß dem unabhängigen Patentanspruch 12. Vorteilhafte Ausführungsformen und Weiterentwicklungen ergeben sich aus der nachfolgenden Beschreibung, den Zeichnungen sowie den anhängigen Patentansprüchen.

Eine Außenhülse eines Verbindungselements ohne weibliches Gewinde mit Dämpfungsfunktion umfasst: einen elastischen Außenkörper mit einem hülsenförmigen Schaft, der einen Befestigungsflansch an einem ersten axialen Ende und eine zu einer Stauchwulst faltbare hohlzylindrische Faltzone benachbart zu einem zweiten axialen Ende aufweist, so dass ein erstes Bauteil zwischen dem Befestigungsflansch und der Stauchwulst abstützbar ist, einen ersten Innendurchmesser im Bereich des Befestigungsflanschs und einen zweiten Innendurchmesser im Bereich der hohlzylindrischen Faltzone, wobei der erste Innendurchmesser größer ist als der zweite Innendurchmesser und ein zweites Bauteil benachbart zum zweiten axialen Ende befestigbar ist.

Nachfolgend wird die Außenhülse bei der Verwendung in einem Verbindungselement zum Verbinden eines ersten Bauteils mit einem zweiten Bauteil beschrieben. Dabei wird die Verwendung zunächst beispielhaft an einem Verbindungspunkt erläutert, bevor auf die besonders vorteilhafte Verwendung bei einer Mehrzahl von Verbindungspunkten zwischen zwei aneinander zu befestigenden Bauteilen eingegangen wird.

Bei der beispielhaften Verwendung der Außenhülse in einem Verbindungselement weist die Außenhülse bereits eine Distanzhülse mit einem dritten Innendurchmesser auf, die benachbart zum zweiten axialen Ende angeordnet ist. Die Funktion der Distanzhülse wird später im Rahmen einer bevorzugten Ausführungsform erläutert. Das Verbindungselement weist weiterhin eine Schraube auf, die über ein inneres Antriebsmerkmal verfügt. Bei dem inneren Antriebsmerkmal handelt es sich beispielsweise um einen Innensechskant, der am Kopf der Schraube vorgesehen ist. Alternativ hierzu kann auch ein äußeres Antriebsmerkmal zum späteren Eindrehen der Schraube vorgesehen sein.

Die Außenhülse wird in einer Öffnung, vorzugsweise in einer runden Öffnung, in einem ersten Bauteil angeordnet. Bei dem ersten Bauteil handelt es sich um ein Anbau- oder Befestigungsteil. Hierin liegt der erste Unterschied zu den oben diskutierten bekannten Außenhülsen und Verbindungselementen, die im Trägerbauteil, also dem zweiten Bauteil, angeordnet werden. Nachdem die Außenhülse im ersten Bauteil angeordnet wurde, ist das erste Bauteil benachbart zum Befestigungsflansch angeordnet. Ein Durchmesser der Öffnung im ersten Bauteil ist daher größer als der Außendurchmesser der Faltzone im Ausgangszustand der Außenhülse, aber kleiner als der Durchmesser des Befestigungsflanschs.

Das erste Bauteil wird nun so mit einem zweiten Bauteil ausgerichtet, dass die Außenhülse im ersten Bauteil mit einem Befestigungsbereich des zweiten Bauteils ausgerichtet ist. Dabei ist das zweite axiale Ende der Außenhülse benachbart zum Befestigungsbereich des zweiten Bauteils angeordnet. Der Befestigungsbereich des zweiten Bauteils stellt ein Innengewinde für die Schraube des Verbindungselements bereit.

Die Schraube wird vom Befestigungsflansch her in die Außenhülse eingesteckt und in den Befestigungsbereich des zweiten Bauteils eingeschraubt. Gemäß einem Beispiel wird eine Scheibe unterhalb des Kopfs der Schraube verwendet, die einen Außendurchmesser aufweist, der größer ist als der zweite Innendurchmesser. Dies wird auch im Rahmen des später detailliert beschriebenen erfindungsgemäßen Verbindungselements deutlich, bei dem eine Toleranzausgleichsscheibe verwendet wird.

Das Einschrauben bewirkt die Kompression der Außenhülse und damit die Ausbildung der Stauchwulst und erfolgt, bis die Distanzhülse ein weiteres Einschrauben verhindert. Auf diese Weise ist das erste Bauteil nach dem Festschrauben zwischen der Stauchwulst und dem Befestigungsflansch angeordnet, wohingegen das zweite Bauteil benachbart zum zweiten axialen Ende der Außenhülse angeordnet ist.

Im Hinblick auf die Dimensionierung weist die Schraube einen Außendurchmesser auf, der kleiner ist als der zweite Innendurchmesser der Außenhülse und auch kleiner als der dritte Innendurchmesser der Distanzhülse. Auf diese Weise liegt keine Gewindeverbindungen zwischen Schraube und Außenhülse und/oder Schraube und Distanzhülse vor. Vielmehr ist die Schraube in der Außenhülse mit seitlichem oder radialem Spiel angeordnet.

Unter Berücksichtigung dieser besonderen Dimensionierung wird der besondere Vorteil der Außenhülse gerade bei einer Vielzahl von Verbindungspunkte zwischen dem ersten und dem zweiten Bauteil deutlich. Wenn das erste Bauteil mit einer Vielzahl von runden Öffnungen ausgestattet ist, in denen jeweils eine Außenhülse angeordnet ist, dann können bei der Ausrichtung zu den Befestigungsbereich des zweiten Bauteils radiale Toleranzen aufgrund der radialen Bewegbarkeit der Schraube in der Außenhülse und der Distanzhülse auf besonders einfache Weise ausgeglichen werden. Insbesondere müssen keine Langlöcher zum Ausgleich von Toleranzen vorgesehen werden. Zudem, und im Unterschied zu Langlöchern, können radiale Toleranzen mittels der so gestalteten Außenhülse in der Ebene und nicht nur entlang einer Achse ausgeglichen werden. Trotz des anderen Aufbaus ist weiterhin die Zugänglichkeit von nur einer Seite ausreichend. Insgesamt stellt die Außenhülse somit eine vereinfachte Verwendung bei verringerten Herstellungskosten bereit.

Gemäß einer beispielhaften Ausführungsform sind an einer radialen Außenseite eine Mehrzahl an insbesondere gleichmäßig beabstandeten Rastnasen vorgesehen, so dass die Außenhülse in einer ersten Öffnung im ersten Bauteil so befestigbar ist, dass das erste Bauteil zwischen dem Befestigungsflansch und der Mehrzahl an Rastnasen anordenbar ist. Insbesondere sind drei Ratsnasen vorgesehen. Auf diese Weise wird die Außenhülse verlier-sicher in der Öffnung des ersten Bauteils gehalten.

In einer weiteren beispielhaften Ausführungsform ist im Bereich der hohlzylindrischen Faltzone benachbart zu einem zweiten axialen Ende an einer radialen Innenseite mindestens ein erstes Befestigungsmerkmal zur Befestigung einer Distanzhülse vorgesehen. Bezogen auf die spätere Verwendung der Außenhülse in einem Verbindungselement sorgt die Distanzhülse für eine

Beschränkung der Faltzone. Insbesondere, und wie bei der späteren Verwendung des Verbindungselements erläutert, ist eine Kompression nur soweit möglich, bis die Distanzhülse an einem Ende am zweiten Bauteil anliegt und am zweiten Ende mit einer Toleranzausgleichsscheibe benachbart zum Kopf der Schraube. Auch der Innendurchmesser der Distanzhülse ist größer als der Außendurchmesser der Schraube. Somit ist die Schraube auch mit radialem Spiel innerhalb der Distanzhülse angeordnet.

Weiterhin weist die Außenhülse benachbart zum ersten axialen Ende an einer radialen Innenseite insbesondere ein Haltemerkmal zum Zusammenwirken mit einer Haltescheibe auf, so dass eine Schraube mit einer Toleranzausgleichsscheibe im Bereich des Befestigungsflanschs axial fixierbar ist. Auf diese Weise ist insbesondere die Toleranzausgleichsscheibe im Bereich des Befestigungsflanschs verlier-sicher angeordnet. Die Toleranzausgleichsscheibe weist in dieser Hinsicht einen Außendurchmesser auf, der größer ist als der zweite Innendurchmesser. Da der Innendurchmesser der Haltescheibe größer ist als der Kopfdurchmesser der Schraube, aber kleiner als der Außendurchmesser der Toleranzausgleichsscheibe, kann die Toleranzausgleichsscheibe axial nicht aus dem späteren Verbindungselement herausfallen.

Gemäß einer weiteren beispielhaften Ausführungsform besteht die Außenhülse aus einem elastisch verformbaren Kunststoff. Dabei kann der Außenkörper aus einem Elastomer oder einem thermoplastischen Elastomer insbesondere auf Polyesterbasis oder aus einem vernetzten Elastomer bestehen. Je nach Anwendungsfall werden aus dieser Materialbreite beispielsweise Materialien mit guter Chemikalienbeständigkeit und/oder Wärmeformbeständigkeit ausgewählt. Weiterhin ist es möglich, dass das Elastomer auf Polyesterbasis ein Polybutylenterephtalat (PBT) oder Polyethylenenterephtalat (PET) ist. Weitere nicht abschließende Beispiele für Elastomere sind Ethylen-Propylen-Dien-Kautschuk (EPDH), Acrylnitril-Butadien-Kautschuk (NBR), Silikon-Kautschuk (VMQ) und chemisch chlorsulfoniertes Polyethylen (CSM). Weiterhin besteht der elastische Außenkörper beispielsweise aus einem Silikon oder einem ähnlichen chemisch und thermisch beständigen Werkstoff.

Ein erfindungsgemäßes Verbindungselement ohne weibliches Gewinde mit Dämpfungsfunktion, mit dem mindestens ein erstes Bauteil und ein zweites Bauteil über eine Schraubverbindung verbindbar sind, weist die Merkmale auf: eine oben beschriebene Außenhülse, eine in der Außenhülse benachbart zum zweiten axialen Ende angeordnete Distanzhülse mit einem dritten
Innendurchmesser, eine Schraube mit einem ersten Außendurchmesser, wobei der erste Außendurchmesser kleiner ist als der dritte Innendurchmesser der Distanzhülse, so dass die Schraube in der Außenhülse mit radialem Spiel angeordnet ist und das zweite Bauteil mittels der Schraube benachbart zum zweiten axialen Ende der Außenhülse befestigbar ist, sowie eine auf einem Schaft der Schraube angeordnete Toleranzausgleichsscheibe, die einen zweiten Außendurchmesser aufweist, der kleiner ist als der erste Innendurchmesser der Außenhülse, so dass die Toleranzausgleichsscheibe in der Außenhülse mit radialem Spiel angeordnet ist. Im Hinblick auf die Verwendung und Funktion des erfindungsgemäßen Verbindungselements wird auf die obigen Ausführungen zur Außenhülse verwiesen. Dies gilt ebenfalls im Hinblick auf die sich ergebenden Vorteile.

Bei der Herstellung einer Verbindung mithilfe des Verbindungselements gelangt zunächst die Schraube mit dem Innengewinde des Befestigungsbereichs des zweiten Bauteils in Eingriff. Während des Einschraubens der Schraube wird die Außenhülse axial mittels der Toleranzausgleichsscheibe komprimiert und die Faltwulst bildet sich zwischen dem ersten und dem zweiten Bauteil aus. Dies sorgt dafür, dass das erste Bauteil, also das Anbauteil, zwischen der Faltwulst und dem Befestigungsflansch abgestützt wird, während das zweite Bauteil, also das Trägerteil, benachbart zum zweiten axialen Ende der Außenhülse befestigt wird. Vorteilhafterweise liegt im Rahmen der hergestellten Verbindung das axiale Ende der Distanzhülse, das benachbart dem zweiten axialen Ende der Außenhülse angeordnet ist, ebenfalls am zweiten Bauteil an.

Da die Schraube mit Toleranzausgleichsscheibe mit radialem Spiel in der Außenhülse und der Distanzhülse angeordnet sind, kann insbesondere bei einer Mehrzahl an Verbindungspunkten zwischen dem ersten und dem zweiten Bauteil in einfacher Weise ein radialer Toleranzausgleich erfolgen, wie oben erläutert. In einer bevorzugten Ausführungsform weist die Schraube daher eine Zentrierspitze auf, um das anfängliche Einschraube zu erleichtern. Zudem weist die Distanzhülse kein Innengewinde auf, ist also im Inneren gewindelos ausgebildet.

Im Hinblick auf die Größe des radialen Toleranzausgleichs kann dieser spezifisch auf die jeweilige Anwendung zugeschnitten werden durch eine geeignete Kombination der Innendurchmesser der Außenhülse und der Distanzhülse sowie der Außendurchmesser der Schraube und der Toleranzausgleichsscheibe. In einer besonders vorteilhaften Ausführungsform sind der radiale Abstand zwischen dem Außengewinde der Schraube und der Innenseite der Distanzhülse und der radiale Abstand zwischen der radialen Außenseite der Toleranzausgleichsscheibe und der radialen Innenseite des Befestigungsflanschs gleich groß.

Gemäß einer bevorzugten Ausführungsform des Verbindungselements weist die Außenhülse an einer radialen Außenseite eine Mehrzahl an vorzugsweise gleichmäßig beabstandeten Rastnasen auf, so dass die Außenhülse in einer ersten Öffnung im ersten Bauteil so befestigbar ist, dass das erste Bauteil zwischen dem Befestigungsflansch und der Mehrzahl an Rastnasen anordenbar ist. Insbesondere sind drei Rastnasen vorgesehen. Es ist ebenso bevorzugt, dass die Außenhülse im Bereich der hohlzylindrischen Faltzone benachbart zu einem zweiten axialen Ende an einer radialen Innenseite mindestens ein erstes Befestigungsmerkmal aufweist, das mit einem entsprechenden zweiten Befestigungsmerkmal der Distanzhülse zusammenwirkt. Im Hinblick auf die sich daraus ergebenden Vorteile wird ebenfalls auf die Ausführungen zur Außenhülse verwiesen.

In einer vorteilhaften Ausführungsform weist das Verbindungselement weiterhin eine Haltescheibe auf, deren Innendurchmesser kleiner ist als der Außendurchmesser der Toleranzausgleichsscheibe und deren radial äußerer Bereich mit einem Haltemerkmal an der radialen Innenseite der Außenhülse benachbart zum ersten axialen Ende in Eingriff steht, so dass die Toleranzausgleichsscheibe in der Außenhülse mit radialem Spiel angeordnet ist und aufgrund der Haltescheibe in axialer Richtung gehalten wird. Durch diese Anordnung kann die Toleranzausgleichsscheibe bei gleichzeitiger Beibehaltung des radialen Spiels in axialer Richtung verlier-sicher im Befestigungsflansch gehalten werden.

In diesem Zusammenhang ist es ebenfalls bevorzugt, dass die Schraube eine Sicherungsbuchse auf dem Schaft axial beabstandet zu einem Kopf der Schraube aufweist, so dass die Toleranzausgleichsscheibe zwischen dem Kopf und der Sicherungsbuchse gehalten wird. Auf diese Weise ist zunächst die Toleranzausgleichsscheibe verlier-sicher an der Schraube anordenbar. In Kombination mit der oben erwähnten Haltescheibe ergibt sich daraus der weitere Vorteil, dass die Schraube verlier-sicher im Verbindungselement haltbar ist.

Im Hinblick auf diese bevorzugte Ausführungsform ist es besonders vorteilhaft, wenn der Abstand zwischen Kopf und Sicherungsbuchse einem maximalen Überstand der Schraube über das zweite axiale Ende der Außenhülse entspricht, so dass bei einem bündigen Abschließen der Schraube mit dem zweiten axialen Ende der Außenhülse die Sicherungsbuchse an der Toleranzausgleichsscheibe anliegt. Auf diese Weise kann die Haltescheibe selbst bei einem bündigen Abschließen der Schraube mit dem zweiten axialen Ende nicht versehentlich aus der Anordnung herausgedrückt werden.

In einer ebenfalls bevorzugten Ausführungsform bestehen die Außenhülse und die Haltescheibe aus Kunststoff. Im Hinblick auf die entsprechende Materialwahl wird auf die obigen Ausführungen zur Außenhülse verwiesen.

Schließlich ist es auch bevorzugt, dass die Distanzhülse, die Schraube und die Toleranzausgleichsscheibe aus Metall bestehen, insbesondere aus Stahl. Auf diese Weise ist eine hoch feste Metall-Metall-Verbindung realisierbar und die aufgebrachten mechanischen Lasten werden optimal verteilt. Zudem wird vermieden, dass beispielsweise durch Materialrelaxation die hergestellte Verbindung geschwächt wird.

Ein erfindungsgemäßes erstes Bauteil mit mindestens einer Öffnung weist ein darin angeordnetes erfindungsgemäßes Verbindungselement auf. Im Hinblick auf die sich ergebenden Vorteile wird auf die obigen Ausführungen zur Außenhülse sowie zum erfindungsgemäßen Verbindungselement verwiesen, um unnötige Wiederholungen zu vermeiden.

In einer bevorzugten Ausführungsform weist das erste Bauteil eine Mehrzahl an Öffnungen mit darin angeordneten Außenhülsen oder Verbindungselementen auf, insbesondere mindestens zwei, vorzugsweise mindestens drei. Gerade bei einem Bauteil mit einer Mehrzahl an Öffnungen kommen die besonderen Vorteile der Außenhülse und damit auch des Verbindungselements zum Tragen, wie bereits eingangs erläutert.

Eine erfindungsgemäße Verbindung eines ersten Bauteils mit einem zweiten Bauteil erfolgt mittels eines erfindungsgemäßen Verbindungselements, wobei das zweite Bauteil einen Befestigungsbereich mit Innengewinde aufweist, in den die Schraube eingeschraubt ist. Auch hier wird im Hinblick auf die sich ergebenden Vorteile auf die obigen Ausführungen zur Außenhülse sowie zum erfindungsgemäßen Verbindungselement verwiesen, um Wiederholungen zu vermeiden.

In einer vorteilhaften Ausführungsform der Verbindung weist das erste Bauteil eine Mehrzahl an Öffnungen mit darin angeordneten Verbindungselementen auf, insbesondere mindestens zwei, vorzugsweise mindestens drei, und das zweite Bauteil weist eine entsprechende Anzahl an Befestigungsbereichen auf. Gerade bei einem Bauteil mit einer Mehrzahl an Öffnungen kommen die besonderen Vorteile der Außenhülse und damit auch des Verbindungselements zum Tragen. So sind beispielsweise keine Langlöcher im ersten Bauteil zum Ausgleich von radialen Toleranzen erforderlich. Insbesondere findet mittels des erfindungsgemäßen Verbindungselements ein radialer Toleranzausgleich in einer Ebene statt, wohingegen bei einem Langloch ein Toleranzausgleich lediglich entlang einer Achse realisierbar ist.

Ein erfindungsgemäßes Verbindungsverfahren eines ersten Bauteils mit einem zweiten Bauteil mittels eines erfindungsgemäßen Verbindungselements umfasst die Schritte: Bereitstellen des ersten Bauteils mit einer in einer ersten Öffnung des ersten Bauteils angeordneten Außenhülse des Verbindungselements, Ausrichten der mindestens einen Öffnung des ersten Bauteils mit darin angeordneter Außenhülse des Verbindungselements mit mindestens einem Befestigungsbereich des zweiten Bauteils, wobei der Befestigungsbereich ein Innengewinde bereitstellt, das zu einem Außengewinde einer Schraube des Verbindungselements passt, und Einschrauben der Schraube in das Innengewinde des Befestigungsbereichs. Mittels des erfindungsgemäßen Verbindungsverfahrens ist die erfindungsgemäße Verbindung von zwei Bauteilen mittels des erfindungsgemäßen Verbindungselements herstellbar. Daher wird bezüglich der sich ergebenden Vorteile auf die obigen Ausführungen verwiesen.

In einer bevorzugten Ausführungsform umfasst der Schritt des Bereitstellens des ersten Bauteils mit einer in einer ersten Öffnung des ersten Bauteils angeordneten Außenhülse des Verbindungselements das Anordnen der Außenhülse in der ersten Öffnung. Das Anordnen der Außenhülse kann, wenn das Verbindungsverfahren innerhalb einer einzigen Betriebsstätte erfolgt, unmittelbar vor dem Bereitstellen des ersten Bauteils zur Ausrichtung mit dem zweiten Bauteil erfolgen. Alternativ kann das Anordnen aber auch getrennt davon erfolgen. Beispielsweise kann bei der Herstellung des ersten Bauteils dieses vor Auslieferung oder Weitertransport zu einer weiteren Betriebsstätte mit der Außenhülse versehen werden.

In einer weiteren bevorzugten Ausführungsform weist der Schritt des Bercitstellens das Bereitstellen des ersten Bauteils mit einer Vielzahl von Außenhülsen auf, die in einer Vielzahl von ersten Öffnungen angeordnet sind, insbesondere mindestens zwei, vorzugsweise mindestens drei.

Wie bereits oben dargelegt kommen gerade bei einem Bauteil mit einer Mehrzahl an Öffnungen die besonderen Vorteile der Außenhülse und damit auch des Verbindungselements zum Tragen.

Ein alternatives erfindungsgemäßes Verbindungsverfahren eines ersten Bauteils mit einem zweiten Bauteil mittels eines erfindungsgemäßen Verbindungselements, wobei das Verbindungselement weiterhin eine Haltescheibe aufweist, deren Innendurchmesser kleiner ist als der Außendurchmesser der Toleranzausgleichsscheibe und deren radial äußerer Bereich mit einem Haltemerkmal an der radialen Innenseite der Außenhülse benachbart zum ersten axialen Ende in Eingriff steht, so dass die Toleranzausgleichsscheibe in der Außenhülse mit radialem Spiel angeordnet ist und aufgrund der Haltescheibe in axialer Richtung gehalten wird, und die Schraube weist eine Sicherungsbuchse auf dem Schaft axial beabstandet zu einem Kopf der Schraube auf, so dass die Toleranzausgleichsscheibe zwischen dem Kopf und der Sicherungsbuchse gehalten wird, umfasst die Schritte: Bereitstellen des ersten Bauteils mit einem in einer ersten Öffnung des ersten Bauteils angeordneten Verbindungselement mit Schraube, Ausrichten der mindestens einen Öffnung des ersten Bauteils mit darin angeordnetem Verbindungselement mit mindestens einem Befestigungsbereich des zweiten Bauteils, wobei der Befestigungsbereich ein Innengewinde bereitstellt, das zu einem Außengewinde der Schraube des Verbindungselements passt, und Einschrauben der Schraube in das Innengewinde des Befestigungsbereichs. Aufgrund der spezifischen Anordnung des Verbindungselements ist dieses Verbindungsverfahren insbesondere auf einen voll automatisierten Betrieb ausgelegt. Daher ist es besonders bevorzugt, wenn alle Schritte voll automatisiert ausgeführt werden. Die sich daraus ergebenden Vorteile sind, neben den oben bereits diskutierten Vorteilen, dass das Verbindungselement voll automatisiert verarbeitet werden kann, was Zeit und Kosten spart.

In einer vorteilhaften Ausgestaltung umfasst der Schritt des Bereitstellens des ersten Bauteils mit einem in einer ersten Öffnung des ersten Bauteils angeordneten Verbindungselement das Anordnen des Verbindungselements in der ersten Öffnung, wobei das Anordnen vorzugsweise automatisiert erfolgt, beispielsweise mittels Roboter oder Montageautomat. Insbesondere durch die spezifische Konstruktion des Verbindungselements ist die automatisierte Verarbeitung realisierbar, so dass dieses Verbindungsverfahren besonders effizient ist.

Es ist weiterhin bevorzugt, dass der Schritt des Bereitstellens das Bereitstellen des ersten Bauteils mit einer Vielzahl von Verbindungselementen aufweist, die in einer Vielzahl von ersten Öffnungen angeordnet sind, insbesondere mindestens zwei, vorzugsweise mindestens drei. Gerade bei einem Bauteil mit einer Mehrzahl an Öffnungen kommen die besonderen Vorteile der Außenhülse und damit auch des Verbindungselements zum Tragen.

Ein beispielhaftes Herstellungsverfahren für eine beispielhafte Außenhülse weist die Schritte auf: Bereitstellen einer Gussform, insbesondere einer Spritzgussform, die einen Hohlraum aufweist, der komplementär zur auszubildenden Außenhülse ausgebildet ist, Gießen, insbesondere Spritzgießen, eines elastischen Kunststoffs, insbesondere eines Elastomers, in den Hohlraum und Entnehmen der geformten Außenhülse aus der Gussform nach dem Aushärten des Kunststoffs. Mit dem Herstellungsverfahren ist die beispielhafte Außenhülse herstellbar. Daher wird im Hinblick auf die sich ergebenden Vorteile auf die obigen Ausführungen verwiesen.

In einer bevorzugten Ausführungsform weist das Herstellungsverfahren die weiteren Schritte auf: Bereitstellen einer Distanzhülse in der Gussform vor dem Gießen, so dass die Distanzhülse umgossen wird, oder Einstecken der Distanzhülse nach dem Entnehmen der Außenhülse aus der Gussform. Auf diese Weise kann die Außenhülse zusammen mit der Distanzhülse bereitgestellt werden, was die nachfolgende Verarbeitung beispielsweise im Rahmen des erfindungsgemäßen Verbindungsverfahrens erleichtert.

Ein erfindungsgemäßes Herstellungsverfahren für ein erfindungsgemäßes Verbindungselement weist die Schritte auf: Bereitstellen einer Außenhülse, die insbesondere mittels des oben beschriebenen Herstellungsverfahrens hergestellt wurde, und Anordnen einer Distanzhülse darin benachbart zu einem zweiten axialen Ende des Außenkörpers der Außenhülse, Einstecken einer Schraube mit Toleranzausgleichsscheibe in die Außenhülse und Distanzhülse, so dass ein Kopf der Schraube sowie die Toleranzausgleichsscheibe benachbart zum ersten axialen Ende der Außenhülse angeordnet sind, sowie Anordnen einer Haltescheibe benachbart zum ersten axialen Ende, so dass die Toleranzausgleichsscheibe in axialer Richtung gehalten wird. Mit dem erfindungsgemäßen Herstellungsverfahren ist somit das erfindungsgemäße Verbindungselement herstellbar. Bezüglich der sich ergebenden Vorteile wird daher ebenfalls auf die entsprechenden obigen Ausführungen verwiesen.

In einer bevorzugten Ausführungsform weist das Herstellungsverfahren vor dem Einstecken der Schraube den weiteren Schritt aufweist: Anordnen der Toleranzausgleichsscheibe auf der Schraube und danach Anordnen einer Sicherungsbuchse auf dem Schaft, so dass die Toleranzausgleichsscheibe zwischen Kopf und Sicherungsbuchse gehalten wird.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine perspektivische Ansicht einer beispielhaften Ausführungsform einer Außenhülse,
- Figur 2: eine Explosionsansicht einer Unterbaugruppe einer Ausführungsform des Verbindungselements gemäß der vorliegenden Erfindung bestehend aus Schraube, Toleranzausgleichsscheibe und Sicherungsbuchse,
- Figur 3: die Unterbaugruppe gemäß Figur 2 in einem zusammengesetzten Zustand,
- Figur 4: eine Explosionsansicht einer Ausführungsform des Verbindungselements gemäß der vorliegenden Erfindung,
- Figur 5: eine perspektivische Ansicht der Ausführungsform gemäß Figur 4 in einem zusammengesetzten Zustand von oben,
- Figur 6: eine perspektivische Ansicht der Ausführungsform gemäß Figur 4 in einem zusammengesetzten Zustand von unten,
- Figur 7: eine Draufsicht auf die Ausführungsform gemäß Figur 4 in einem zusammengesetzten Zustand bei mittig angeordneter Schraube,
- Figur 8: eine Schnittansicht der Ausführungsform gemäß Figur 4 in einem zusammengesetzten Zustand,
- Figur 9: eine Schnittansicht der Ausführungsform gemäß Figur 4 in einem zusammengesetzten und eingebauten Zustand,
- Figur 10: eine Draufsicht auf die Ausführungsform gemäß Figur 4 in einem zusammengesetzten Zustand bei außermittig angeordneter Schraube,
- Figur 11: eine Schnittansicht der Ausführungsform gemäß Figur 10 in einem eingebauten Zustand,
- Figur 12: ein Flussdiagramm einer ersten Ausführungsform eines Verbindungsverfahrens gemäß der vorliegenden Erfindung,
- Figur 13: ein Flussdiagramm einer zweiten Ausführungsform eines Verbindungsverfahrens gemäß der vorliegenden Erfindung,
- Figur 14: ein Flussdiagramm einer beispielhaften Ausführungsform eines Herstellungsverfahrens einer Außenhülse,
- Figur 15: ein Flussdiagramm einer Ausführungsform eines Herstellungsverfahrens eines Verbindungselements gemäß der vorliegenden Erfindung.

### 5. Detaillierte Beschreibung der bevorzugten Ausführungsformen

Nachfolgend wird eine beispielhafte Ausführungsform einer Außenhülse 10 sowie ein Ausführungsform eines Verbindungselements 1 gemäß der vorliegenden Erfindung detailliert beschrieben. Hierbei wird auch der Einsatz des Verbindungselements 1 sowie der Außenhülse 10 bei der Verbindung von zwei Bauteilen 3, 5 beschrieben. Dabei handelt es sich bei dem ersten Bauteil 3 vorzugsweise um ein Anbauteil und bei dem zweiten Bauteil 5 um ein Trägerbauteil.

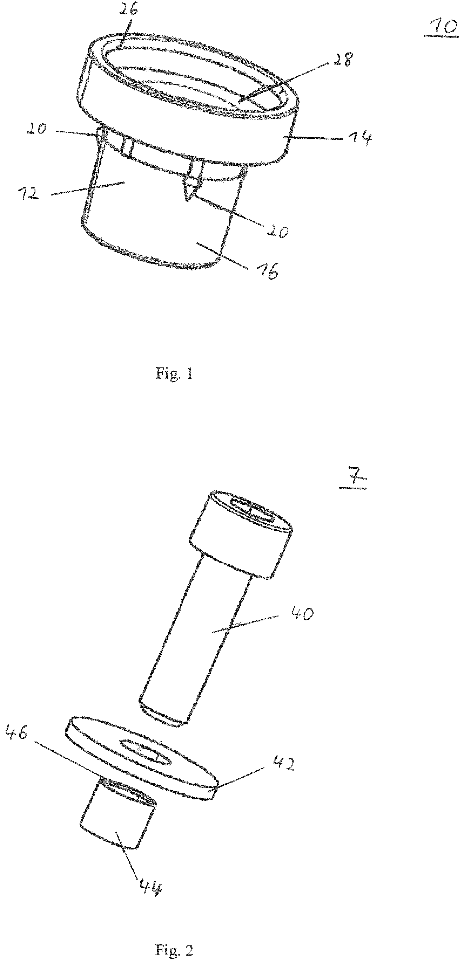

Nachfolgend bezugnehmend auf Figur 1 ist eine perspektivische Ansicht einer beispielhaften Ausführungsform der Außenhülse 10 dargestellt, die aus einem elastisch verformbaren Kunststoff besteht. Beispielhafte Materialien für die Außenhülse 10 sind Elastomere oder thermoplastische Elastomere bevorzugt auf Polyesterbasis oder aus einem vernetzten Elastomer. Je nach Anwendungsfall werden aus dieser Materialbreite beispielsweise Materialien mit guter Chemikalienbeständigkeit und/oder Wärmeformbeständigkeit ausgewählt. Weiterhin bevorzugt ist das Elastomer auf Polyesterbasis ein Polybutylenterephtalat (PBT) oder Polyethylenenterephtalat (PET). Weitere nicht abschließende Beispiele für Elastomere sind Ethylen-Propylen-Dien-Kautschuk (EPDH), Acrylnitril-Butadien-Kautschuk (NBR), Silikon-Kautschuk (VMQ) und chemisch chlorsulfoniertes Polyethylen (CSM). Weiterhin bevorzugt besteht die Außenhülse 10 aus einem Silikon oder einem ähnlichen chemisch und thermisch beständigen Werkstoff.

Die Außenhülse 10 weist einen elastischen Außenkörper mit einem hülsenförmigen Schaft 12 auf. Der Außenkörper umfasst einen Befestigungsflansch 14 an einem ersten axialen Ende. Ebenso umfasst der elastische Außenkörper eine zu einer Stauchwulst 18 faltbare hohlzylindrische Faltzone 16 benachbart zu einem zweiten axialen Ende.

Die Außenhülse 10 weist einen ersten Innendurchmesser im Bereich des Befestigungsflanschs 14 und einen zweiten Innendurchmesser im Bereich der hohlzylindrischen Faltzone 16 auf. Der erste Innendurchmesser ist größer als der zweite Innendurchmesser. Auf diese Weise wird im Bereich des Übergangs vom Befestigungsflansch 14 zur hohlzylindrischen Faltzone bzw. zum hülsenförmigen Schaft 12 eine Anlagefläche 28 an der Innenseite der Außenhülse 10 gebildet.

Benachbart zum Befestigungsflansch 14 sind an der radialen Außenseite der Außenhülse 10 drei gleichmäßig beabstandete Rastnasen 20 vorgesehen. Bei der späteren Verwendung der Außenhülse 10 wird die Außenhülse 10 soweit in eine Öffnung im ersten Bauteil 3 eingesetzt, bis der Befestigungsflansch an einer Seite des ersten Bauteils 3 anliegt. Die Öffnung im ersten Bauteil 3 ist vorzugsweise rund ausgebildet. Die Rastnasen 20 sind in diesem eingesetzten Zustand daher der entgegengesetzten zweiten Seite des ersten Bauteils 3 zugewandt. Ein Abstand zwischen den Rastnasen 20 und dem Befestigungsflansch 14 ist daher auf die Dicke des ersten Bauteils 3 im Bereich der jeweiligen Öffnung angepasst.

Weiterhin weist die Außenhülse 10 benachbart zum zweiten axialen Ende im Inneren ein erstes 22 sowie ein drittes Befestigungsmerkmal 24 auf, die zur Befestigung einer Distanzhülse 30 dienen, was später erläutert wird. Weiterhin ist ein Haltemerkmal 26 benachbart zum ersten axialen Ende der Außenhülse 10 vorgesehen, hier in der Form eines radial nach innen ragenden Vorsprungs. Die Bedeutung dieses Vorsprungs wird später im Zusammenhang mit der Ausführungsform des erfindungsgemäßen Verbindungselements 1 diskutiert.

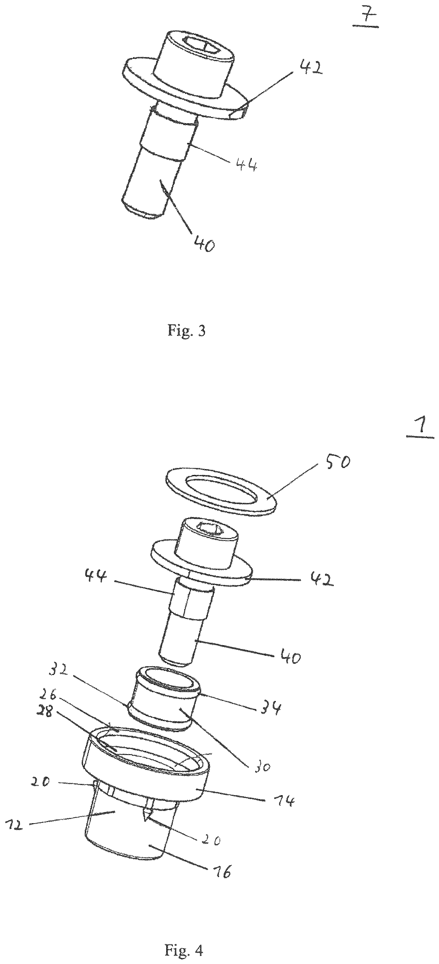

Nun bezugnehmend auf die Figuren 2 und 3 ist eine Unterbaugruppe 7 des Verbindungselements 1 dargestellt. Diese Unterbaugruppe 7 besteht aus der Schraube 40, der Toleranzausgleichsscheibe 42 sowie einer Sicherungsbuchse 44, die vorzugsweise aus Kunststoff besteht und eine Innenfase 46 aufweist. Bei der Schraube 40 handelt es sich beispielsweise um eine metrische Schraube, auch wenn andere Schraubenarten ebenfalls verwendbar sind.

Der Durchmesser der Öffnung in der Toleranzausgleichsscheibe 42 ist nur geringfügig größer als der Durchmesser des Außengewindes der Schraube 40. So hat die Toleranzausgleichsscheibe 42 nur wenig Spiel, lässt sich aber axialen leichtgängig verschieben. Die Sicherungsbuchse 44 aus Kunststoff hat einen kleineren Innendurchmesser als das Außengewinde der Schraube 40. Daher wird die Sicherungsbuchse 44 auf das Außengewinde der Schraube 40 aufgepresst. Dieser Vorgang wird durch die Fase der Schraube 40 und der Innenfase 46 der Sicherungsbuchse 44 erleichtert. Ein Außendurchmesser der Sicherungsbuchse 44 ist leicht größer gewählt als der Innendurchmesser der Toleranzausgleichsscheibe 42. Grundsätzlich dient die Sicherungsbuchse 44 in diesem Zustand daher als Verlier-Sicherung für die Toleranzausgleichsscheibe 42. Auf diese Weise ist ein automatisches Verarbeiten der Schraube 40 mit darauf angeordneter Toleranzausgleichsscheibe 42 realisierbar.

Im Hinblick auf die axiale Höhe der Anordnung der Sicherungsbuchs 44 wird diese so weit auf die Schraube 40 geschoben, dass sich ein definierter Abstand zwischen Kopfunterseite der Schraube 40 und dem Ende der Sicherungsbuchse 44 ergibt, das dem Schraubenkopf zugewandt ist. Der Abstand wird so gewählt, dass er einem Überstand der Schraube 40 über das zweite axiale Ende der Außenhülse 10 entspricht, wenn die Schraube 40 in die Außenhülse 10 eingesetzt ist. Dieser definierte Zwischenraum ist für die einwandfreie Funktion des Verbindungselements 1 insbesondere bei einer vollautomatischen Verarbeitung wichtig, was später deutlich wird.

Figur 3 zeigt die zusammengesetzte Unterbaugruppe bestehend aus Schraube 40, Toleranzausgleich Scheibe 42 sowie Sicherungsprozesse 44.

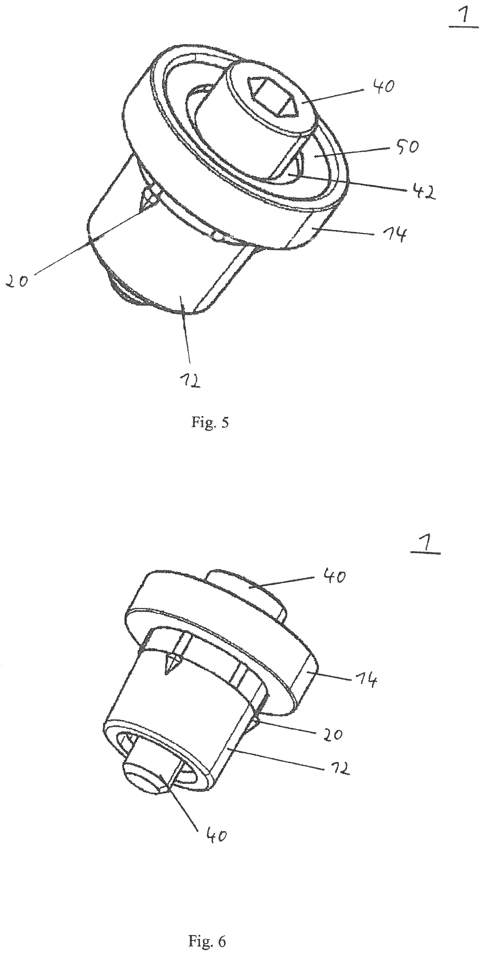

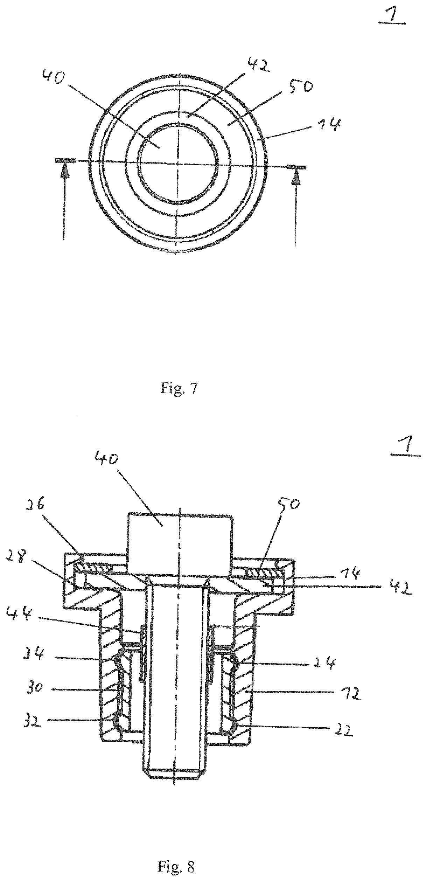

Nachfolgend wird auf die Figuren 4-8 Bezug genommen, die eine Ausführungsform eines Verbindungselements 1 zeigen, wobei im Hinblick auf die Außenhülse 10 auf die obigen Ausführungen verwiesen wird. Benachbart zum zweiten axialen Ende der Außenhülse 10 ist eine Distanzhülse 30 angeordnet. Die Distanzhülse 30 besteht vorzugsweise aus Stahl, auch wenn eine Ausgestaltung aus Kunststoff ebenfalls realisierbar ist. Die Distanzhülse 30 wird beispielsweise in die Außenhülse 10 eingeschoben, bis das zweite Befestigungsmerkmal 32 und das vierte Befestigungsmerkmal 34 der Distanzhülse 30 mit entsprechenden ersten Befestigungsmerkmalen 22 und dritten Befestigungsmerkmal 24 der Außenhülse 10 zusammenwirken. Bei dem zweiten 32 und vierten Befestigungsmerkmal 34 der Distanzhülse 30 handelt es sich beispielsweise um Wülste und bei dem ersten 22 und dritten Befestigungsmerkmal 24 der Außenhülse 10 um entsprechend komplementäre Formen. Anstatt der Wülste können auch Nuten an der Distanzhülse 30 vorgesehen sein. Wichtig hierbei ist, dass die Innenkontur der Außenhülse 10 im Innenbereich der Faltzone 16 hierauf angepasst ist.

Nun wird die Schraube 40 mit darauf angeordneter Toleranzausgleichsscheibe 42 und Sicherungsbuchse 44 vom ersten axialen Ende der Außenhülse 10 her in die Außenhülse 10 eingesetzt. Auf diese Weise kommt eine Unterseite der Toleranzausgleichsscheibe 42 mit der Anlagefläche 28 in Kontakt, die aufgrund der Stufe zwischen dem ersten Innendurchmesser und dem zweiten Innendurchmesser entsteht. Ein Außendurchmesser der Toleranzausgleichsscheibe 42 ist dabei so gewählt, dass er kleiner ist als der erste Innendurchmesser im Befestigungsflansch 14. Auf diese Weise ist im Bereich des Befestigungsflanschs 14 ein radiales Spiel vorhanden. Ebenso sind der zweite Innendurchmesser der Außenhülse 10 sowie der dritte Innendurchmesser der Distanzhülse 30 so gewählt, dass sie größer sind als der Außendurchmesser der Schraube 40 sowie der Sicherungsbuchse 44. Auf diese Weise ist die Schraube 40 insgesamt mit radialem Spiel in der Außenhülse 10 angeordnet. Das radiale Spiel kann in Abhängigkeit vom jeweiligen Anwendungsfall durch eine geeignete Dimensionierung angepasst werden. Besonders vorteilhaft sind im zentrierten Zustand der Schraube 40 in der Außenhülse 10 ein radialer Abstand zwischen der radialen Außenseite der Sicherungsbuchse 44 und der radialen Innenseite der Distanzhülse 30 und der radialen Außenseite der Toleranzausgleichsscheibe 42 und der radialen Innenseite des Befestigungsflanschs 14 gleich. In einer beispielhaften Ausführungsform beträgt der Abstand 1 mm, so dass radiale Toleranzen im Bereich von ± 1 mm ausgleichbar sind.

Nachdem dies erfolgt ist, wird die Haltescheibe 50 vom ersten axialen Ende der Außenhülse 10 her in den Befestigungsflansch 14 eingesetzt. Ein Außendurchmesser der Haltescheibe 50 ist so gewählt, dass die radial äußere Seite der Haltescheibe 50 mit dem Haltemerkmal 26 im Bereich des Befestigungsflanschs 14 zusammen wirkt. Ein Innendurchmesser der Haltescheibe 50 ist so gewählt, dass er kleiner ist als der Außendurchmesser der Toleranzausgleichsscheibe 42, aber größer als der Außendurchmesser des Kopfs der Schraube 40.

Wenn ein erstes Bauteil 3 in einem Fahrzeug beispielsweise an drei oder mehr Verbindungspunkten befestigt werden soll, dann weist das erste Bauteil 3 entsprechende Öffnungen auf, in die das Verbindungselement 1 eingesteckt wird, bis es hinter die Rastnasen 20 rastet. An dem zweiten Bauteil 5, beispielsweise der Fahrzeugkarosserie, sind an den entsprechenden Stellen Befestigungsbereiche mit Innengewinde vorgesehen, beispielsweise in Form von Schweißmuttern. In diese Befestigungsbereiche mit Innengewinde wird später die Schraube 40 eingeschraubt.

Zunächst wird das erste Bauteil 3 jedoch so positioniert, dass die Verbindungselemente 1 und damit die Schrauben 40 mit allen Befestigungsbereichen des zweiten Bauteils 5 ausgerichtet sind. Um ein Einschrauben der Schrauben 40 zu unterstützen, können die Schrauben 40 eine Zentrierspitze aufweisen. Weiterhin verfügen die Schrauben 40 am Schraubenkopf über ein Antriebsmerkmal. Im dargestellten Beispiel handelt es sich hierbei um einen Innensechskant. Andere innere Antriebsmerkmale sind ebenso realisierbar. Auch ist die Verwendung eines äußeren Antriebsmerkmals möglich.

Beim Festschrauben der Schraube 40 bildet sich unterhalb der Rastnasen 20 eine Stauchwulst 18, sodass der Rand der Öffnung im ersten Bauteil 3 von der Außenhülse 10 umschlossen wird. Das Festschrauben erfolgt, bis die Distanzhülse 30 mit einem Ende am zweiten Bauteil 5 anliegt und mit dem anderen Ende an der Toleranzausgleichsscheibe 42 anliegt. Insbesondere wenn die Toleranzausgleichsscheibe 42 und die Distanzhülse 30 aus einem Metall sind, beispielsweise Stahl, ist eine hoch-feste Verschraubung realisierbar.

Ein besonderer Vorteil dieses Verbindungselements 1 ist, dass es Abstandstoleranzen der einzelnen Verbindungspunkte ausgleichen kann. Die Toleranzausgleichsscheibe 42 ist daher nicht hinter das Haltemerkmal 26 geklipst, sondern sie hat radiales Spiel im Bereich des Befestigungsflanschs 14. Dies gilt auch für die Schraube 40 in der Außenhülse 10. In der Außenhülse 10 wird die Unterbaugruppe 7 mittels der Haltescheibe 50 gehalten, wobei sich vor dem Festschrauben nur die Schraube 40 in axialer Richtung bewegen kann, um ein versehentliches Herausdrücken der Haltescheibe 50 aus der Außenhülse 10 zu vermeiden.

Zu diesem Zweck wird der Abstand zwischen der Unterseite des Kopfs der Schraube 40 und dem dem Kopf der Schraube zugewandten Ende der Sicherungsbuchse 44 so gewählt, dass die Schraube 40 im Anlieferungszustand des Verbindungselements 1 am unteren Rand nicht übersteht, wenn die Sicherungsbuchse 44 an der Toleranzausgleichsscheibe 42 anliegt. Dies ist wichtig, damit die Haltescheibe 50 bei unsachgemäßer Behandlung des Verbindungselements 1 nicht aus der Hinterrastung gedrückt werden kann.

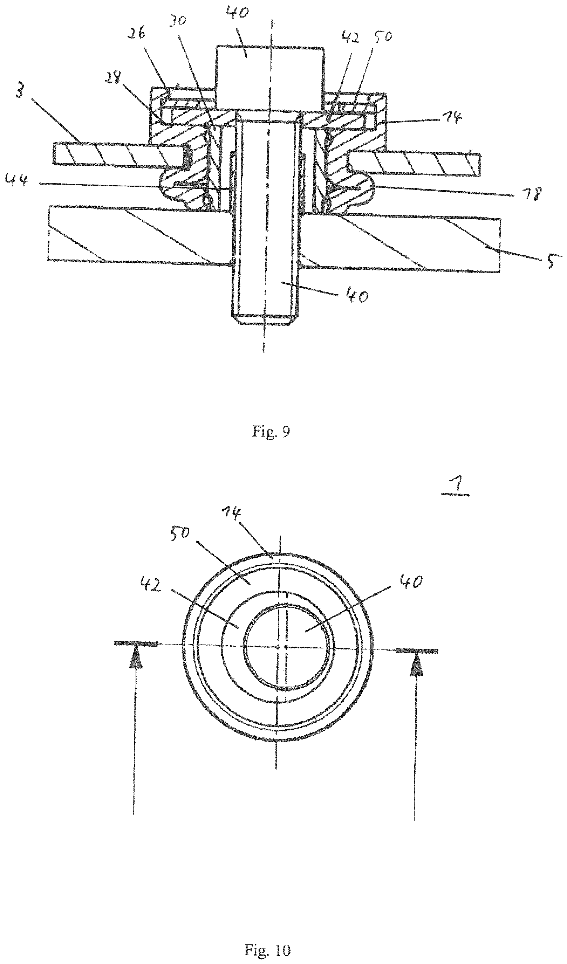

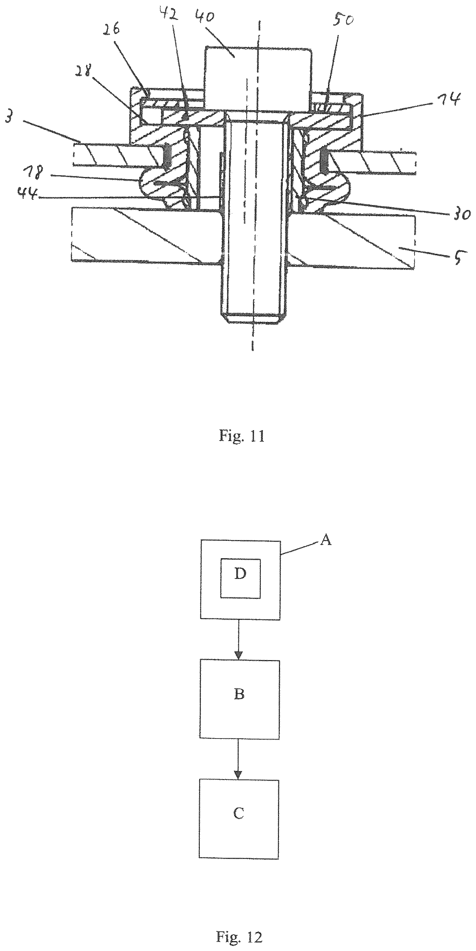

Eine beispielhafte Darstellung einer Verbindung, bei der das radiale Spiel ausgenutzt wird, ist in den Figuren 10 und 11 dargestellt. Hierbei ist die Schraube 40 mit Toleranzausgleichsscheibe 42 und Sicherungsbuchse 44 außermittig angeordnet und in Kontakt mit der radialen Innenseite der Distanzhülse 30 und des Befestigungsflanschs 14.

Figur 12 zeigt ein Flussdiagramm einer Ausführungsform eines Verbindungsverfahrens eines ersten Bauteils 3 mit einem zweiten Bauteil 5 mittels eines Verbindungselements 1. In einem ersten Schritt A erfolgt ein Bereitstellen des ersten Bauteils 3 mit einer in einer ersten Öffnung des ersten Bauteils 3 angeordneten Außenhülse 10 des Verbindungselements 1. Der Schritt A des Bereitstellens umfasst dabei vorzugsweise den Schritt D des Anordnens der Außenhülse 10 in der ersten Öffnung. Dabei ist es besonders bevorzugt, dass das erste Bauteil 3 mit einer Vielzahl von Außenhülsen 10 ausgestattet ist, die in einer Vielzahl von ersten Öffnungen angeordnet sind, insbesondere mindestens zwei, vorzugsweise mindestens drei.

Danach erfolgt in einem weiteren Schritt B ein Ausrichten der mindestens einen Öffnung des ersten Bauteils 3 mit darin angeordneter Außenhülse 10 des Verbindungselements 1 mit mindestens einem Befestigungsbereich des zweiten Bauteils 5. Der Befestigungsbereich stellt, wie oben beschrieben, ein Innengewinde bereit, das zu einem Außengewinde der Schraube 40 des Verbindungselements 1 passt. Abschließend erfolgt in Schritt C ein Einschrauben der Schraube 40 in das Innengewinde des Befestigungsbereichs.

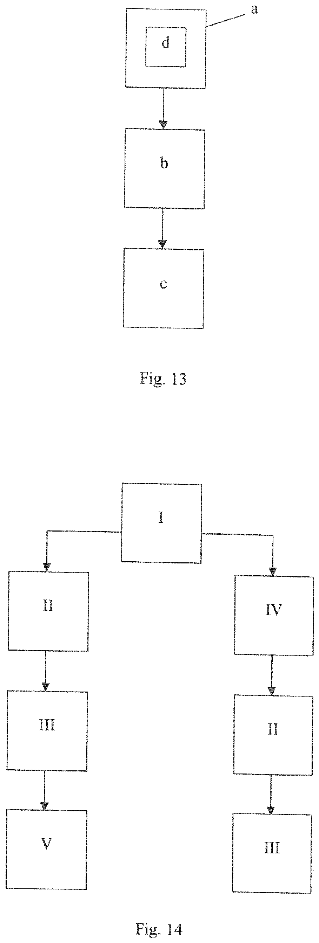

Ein weiteres Flussdiagramm einer Ausführungsform eines Verbindungsverfahrens ist in Figur 13 dargestellt. Die Besonderheit dieses Verfahrens, insbesondere im Vergleich zu dem Verfahren gemäß Figur 12, beruht auf der Ausgestaltung des verwendeten Verbindungselements 1. Das im Rahmen dieses Verbindungsverfahrens verwendete Verbindungselement 1 umfasst zusätzlich eine Haltescheibe 50. Ein Innendurchmesser der Haltescheibe 50 ist kleiner als der Außendurchmesser der Toleranzausgleichsscheibe 42. Zudem steht der radial äußere Bereich der Haltescheibe 50 mit einem Haltemerkmal 26 an der radialen Innenseite der Außenhülse 10 benachbart zum ersten axialen Ende in Eingriff. Auf diese Weise ist die Toleranzausgleichsscheibe 42 in der Außenhülse 10 mit radialem Spiel angeordnet und wird aufgrund der Haltescheibe 50 in axialer Richtung gehalten. Die Schraube 40 weist bereits eine Sicherungsbuchse 44 auf dem Schaft axial beabstandet zu einem Kopf der Schraube 40 auf. Daher wird die Toleranzausgleichsscheibe 42 zwischen dem Kopf und der Sicherungsbuchse 44 verlier-sicher gehalten, so dass die Unterbaugruppe 7 insgesamt verlier-sicher in der Außenhülse 10 angeordnet ist.

Die Schritte des Verbindungsverfahrens selbst entsprechen den Schritten des oben bereits beschriebenen Verbindungsverfahrens. Im Unterscheid zu dem oben beschriebenen Verbindungsverfahren sind die Schritte aufgrund der speziellen Ausgestaltung des Verbindungselements 1 allerdings voll automatisiert ausführbar. Das bedeutet, dass in einem ersten Schritt a ein Bereitstellen des ersten Bauteils 3 mit einer in einer ersten Öffnung des ersten Bauteils 3 angeordneten Außenhülse 10 des Verbindungselements 1 erfolgt. Der Schritt a des Bereitstellens umfasst dabei vorzugsweise ebenfalls den Schritt d des Anordnens der Außenhülse 10 in der ersten Öffnung. Dabei ist es besonders bevorzugt, dass das erste Bauteil 3 mit einer Vielzahl von Außenhülsen 10 ausgestattet ist, die in einer Vielzahl von ersten Öffnungen angeordnet sind, insbesondere mindestens zwei, vorzugsweise mindestens drei.

Danach erfolgt in einem weiteren Schritt b ein Ausrichten der mindestens einen Öffnung des ersten Bauteils 3 mit darin angeordneter Außenhülse des Verbindungselements 1 mit mindestens einem Befestigungsbereich des zweiten Bauteils 5. Der Befestigungsbereich 5 stellt, wie oben beschrieben, ein Innengewinde bereit, das zu einem Außengewinde einer Schraube 40 des Verbindungselements 1 passt. Abschließend erfolgt in Schritt c ein Einschrauben der Schraube 40 in das Innengewinde des Befestigungsbereichs.

Eine Ausführungsform eines Herstellungsverfahrens für eine Außenhülse 10 ist im Flussdiagramm der Figur 14 dargestellt. In einem ersten Schritt I wird eine Gussform bereitgestellt, insbesondere eine Spritzgussform, die einen Hohlraum aufweist, der komplementär zur auszubildenden Außenhülse 10 ausgebildet ist. Nun gliedert sich das Herstellungsverfahren in zwei unterschiedliche Vorgehensweisen auf.

In einer ersten Ausgestaltung erfolgt nach dem ersten Schritt I in einem zweiten Schritt II ein Gießen, insbesondere Spritzgießen, eines elastischen Kunststoffs, insbesondere eines Elastomers, in den Hohlraum. Daran schließt sich in Schritt III ein Entnehmen der geformten Außenhülse 10 aus der Gussform nach dem Aushärten des Kunststoffs an. Optional kann die so geformte Außenhülse 10 bereits mit einer Distanzhülse 30 versehen werden durch den weiteren Schritt V des Einsteckens der Distanzhülse 30 in die Außenhülse 10 nach dem Entnehmen der Außenhülse 10 aus der Gussform.

In einer zweiten Ausgestaltung erfolgt nach dem ersten Schritt I in einem nachfolgenden Schritt IV ein Bereitstellen einer Distanzhülse 30 in der Gussform vor dem Gießen, so dass die Distanzhülse 30 umgossen wird. Daran schließt sich der Schritt II des Gießens, insbesondere des Spritzgießens, eines elastischen Kunststoffs, insbesondere eines Elastomers, in den Hohlraum an. Nun folgt im nächsten Schritt III ein Entnehmen der geformten Außenhülse 10 aus der Gussform nach dem Aushärten des Kunststoffs. Da die Außenhülse 10 in diesem Fall bereits direkt mit der Distanzhülse 30 ausgebildet wird, ist der Schritt V des Einsteckens der Distanzhülse 30 in die Außenhülse 10 nicht erforderlich.

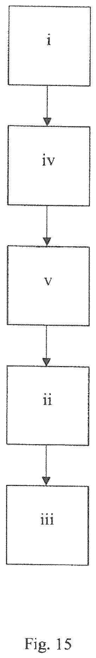

Figur 15 zeigt schließlich ein Flussdiagramm eines Herstellungsverfahrens für ein Verbindungselement 1. Hier erfolgen in einem ersten Schritt i ein Bereitstellen einer Außenhülse 10 und ein Anordnen einer Distanzhülse 30 darin benachbart zu einem zweiten axialen Ende der Außenhülse 10. Sofern die Außenhülse 10 bereits mit einer Distanzhülse 30 ausgestattet ist, beispielsweise aufgrund der Herstellung mittels des oben beschriebenen Herstellungsverfahrens, ist der Schritt des Anordnens der Distanzhülse 30 in der Außenhülse 10 entbehrlich.

Vorher, parallel dazu oder danach erfolgen in Schritt iv ein Anordnen einer Toleranzausgleichsscheibe 42 auf der Schraube 40 und danach in Schritt v ein Anordnen einer Sicherungsbuchse 44 auf dem Schaft der Schraube 40, so dass die Toleranzausgleichsscheibe 42 zwischen Kopf und Sicherungsbuchse 44 gehalten wird. Die so ausgebildete Schraube 40 mit Toleranzausgleichsscheibe 42 wird nun in Schritt ii in die Außenhülse 10 und die Distanzhülse 30 eingesteckt, so dass ein Kopf der Schraube 40 sowie die Toleranzausgleichsscheibe 42 benachbart zum ersten axialen Ende der Außenhülse 10 angeordnet sind. Abschließend erfolgt in Schritt iii ein Anordnen einer Haltescheibe 50 benachbart zum ersten axialen Ende, so dass die Toleranzausgleichsscheibe 42 in axialer Richtung gehalten wird.

### 6. Bezugszeichenliste

- 1: Verbindungselement
- 3: erstes Bauteil
- 5: zweites Bauteil
- 7: Unterbaugruppe
- 10: Außenhülse
- 12: hülsenförmiger Schaft
- 14: Befestigungsflansch
- 16: Faltzone
- 18: Stauchwulst
- 20: Rastnase
- 22: erstes Befestigungsmerkmal der Außenhülse 10
- 24: drittes Befestigungsmerkmal der Außenhülse 10
- 26: Haltemerkmal
- 28: Anlagefläche
- 30: Distanzhülse
- 32: zweites Befestigungsmerkmal der Distanzhülse 30
- 34: viertes Befestigungsmerkmal der Distanzhülse 30
- 40: Schraube
- 42: Toleranzausgleichsscheibe
- 44: Sicherungsbuchse
- 46: Innenfase der Sicherungsbuchse 44
- 50: Haltescheibe

## Patentansprüche

1. Ein Verbindungselement (1) ohne weibliches Gewinde mit Dämpfungsfunktion, mit dem mindestens ein erstes Bauteil (3) und ein zweites Bauteil (5) über eine Schraubverbindung verbindbar sind, das die Merkmale aufweist:
a. eine Außenhülse (10) die aufweist:
a. einen elastischen Außenkörper mit einem hülsenförmigen Schaft (12), der einen Befestigungsflansch (14) an einem ersten axialen Ende und eine zu einer Stauchwulst (18) faltbare hohlzylindrische Faltzone (16) benachbart zu einem zweiten axialen Ende aufweist, so dass ein erste Bauteil (3) zwischen dem Befestigungsflansch (14) und der Stauchwulst (18) abstützbar ist,
b. einen ersten Innendurchmesser im Bereich des Befestigungsflanschs (14) und einen zweiten Innendurchmesser im Bereich der hohlzylindrischen Faltzone (16), wobei der erste Innendurchmesser größer ist als der zweite Innendurchmesser und ein zweites Bauteil (5) benachbart zum zweiten axialen Ende befestigbar ist,
b. eine in der Außenhülse (10) benachbart zum zweiten axialen Ende angeordnete Distanzhülse (30) mit einem dritten Innendurchmesser,
c. eine Schraube (40) mit einem ersten Außendurchmesser, wobei der erste Außendurchmesser kleiner ist als der dritte Innendurchmesser der Distanzhülse (30), so dass die Schraube (40) in der Außenhülse (10) mit radialem Spiel angeordnet ist und das zweite Bauteil mittels der Schraube (40) benachbart zum zweiten axialen Ende der Außenhülse (10) des Verbindungselements (1) befestigbar ist, sowie
d. eine auf einem Schaft der Schraube (40) angeordnete Toleranzausgleichsscheibe (42), die einen zweiten Außendurchmesser aufweist, der kleiner ist als der erste Innendurchmesser der Außenhülse (10), so dass die Toleranzausgleichsscheibe (42) in der Außenhülse (10) mit radialem Spiel angeordnet ist.

2. Das Verbindungselement (1) gemäß Patentanspruch 1, bei dem die Außenhülse (10) an einer radialen Außenseite eine Mehrzahl an vorzugsweise gleichmäßig beabstandeten Rastnasen (20) aufweist, so dass die Außenhülse (10) in einer ersten Öffnung im ersten Bauteil (3) so befestigbar ist, dass das erste Bauteil (3) zwischen dem Befestigungsflansch (14) und der Mehrzahl an Rastnasen (20) anordenbar ist und/oder bei dem die Außenhülse (10) im Bereich der hohlzylindrischen Faltzone (16) benachbart zu einem zweiten axialen Ende an einer radialen Innenseite mindestens ein erstes Befestigungsmerkmal (22) aufweist, das mit einem entsprechenden zweiten Befestigungsmerkmal (32) der Distanzhülse (30) zusammenwirkt.

3. Das Verbindungselement (1) gemäß einem der Patentansprüche 1 oder 2, das weiterhin eine Haltescheibe (50) aufweist, deren Innendurchmesser kleiner ist als der Außendurchmesser der Toleranzausgleichsscheibe (42) und deren radial äußerer Bereich mit einem Haltemerkmal (26) an der radialen Innenseite der Außenhülse (10) benachbart zum ersten axialen Ende in Eingriff steht, so dass die Toleranzausgleichsscheibe (42) in der Außenhülse (10) mit radialem Spiel angeordnet ist und aufgrund der Haltescheibe (50) in axialer Richtung gehalten wird.

4. Das Verbindungselement (1) gemäß einem der Patentansprüche 1 bis 3, dessen Schraube (40) eine Sicherungsbuchse (44) auf dem Schaft axial beabstandet zu einem Kopf der Schraube (40) aufweist, so dass die Toleranzausgleichsscheibe (42) zwischen dem Kopf und der Sicherungsbuchse (44) gehalten wird.

5. Das Verbindungselement (1) gemäß Patentanspruch 4, bei dem der Abstand zwischen Kopf und Sicherungsbuchse (44) einem maximalen Überstand der Schraube (40) über das zweite axiale Ende der Außenhülse (10) entspricht, so dass bei einem bündigen Abschließen der Schraube (40) mit dem zweiten axialen Ende der Außenhülse (10) die Sicherungsbuchse (44) an der Toleranzausgleichsscheibe (42) anliegt.

6. Das Verbindungselement (1) gemäß einem der vorhergehenden Patentansprüche 1 bis 5, bei dem a) die Außenhülse (10) und die Haltescheibe (50) aus Kunststoff bestehen und/oder bei dem b) die Distanzhülse (30), die Schraube (40) und die Toleranzausgleichsscheibe (42) aus Metall bestehen, insbesondere Stahl.

7. Ein erstes Bauteil (3) mit mindestens einer Öffnung und einem darin angeordneten Verbindungselement (1) gemäß einem der Patentansprüche 1 bis 6.

8. Eine Verbindung eines ersten Bauteils (3) mit einem zweiten Bauteil (5) mittels eines Verbindungselements (1) gemäß einem der Patentansprüche 1 bis 6, wobei das zweite Bauteil (5) einen Befestigungsbereich mit Innengewinde aufweist, in den die Schraube (40) eingeschraubt ist.

9. Ein Verbindungsverfahren eines ersten Bauteils (3) mit einem zweiten Bauteil (5) mittels eines Verbindungselements (1) gemäß einem der Patentansprüche 1 bis 6, das die Schritte umfasst:
a. Bereitstellen (A) des ersten Bauteils (3) mit einer in einer ersten Öffnung des ersten Bauteils (3) angeordneten Außenhülse (10) des Verbindungselements (1),
b. Ausrichten (B) der mindestens einen Öffnung des ersten Bauteils (3) mit darin angeordneter Außenhülse (10) des Verbindungselements (1) mit mindestens einem Befestigungsbereich des zweiten Bauteils (5), wobei der Befestigungsbereich ein Innengewinde bereitstellt, das zu einem Außengewinde der Schraube (40) des Verbindungselements (1) passt, und
c. Einschrauben (C) der Schraube (40) in das Innengewinde des Befestigungsbereichs.

10. Ein Verbindungsverfahren eines ersten Bauteils (3) mit einem zweiten Bauteil (5) mittels eines Verbindungselements (1) gemäß einem der Patentansprüche 1 bis 6, wobei das Verbindungselement (1) weiterhin eine Haltescheibe (50) aufweist, deren Innendurchmesser kleiner ist als der Außendurchmesser der Toleranzausgleichsscheibe (42) und deren radial äußerer Bereich mit einem Haltemerkmal (26) an der radialen Innenseite der Außenhülse (10) benachbart zum ersten axialen Ende in Eingriff steht, so dass die Toleranzausgleichsscheibe (42) in der Außenhülse (10) mit radialem Spiel angeordnet ist und aufgrund der Haltescheibe (50) in axialer Richtung gehalten wird, und die Schraube (40) weist eine Sicherungsbuchse (44) auf dem Schaft axial beabstandet zu einem Kopf der Schraube (40) auf, so dass die Toleranzausgleichsscheibe (42) zwischen dem Kopf und der Sicherungsbuchse (44) gehalten wird, und das die Schritte umfasst:
a. Bereitstellen (a) des ersten Bauteils (3) mit einem in einer ersten Öffnung des ersten Bauteils (3) angeordneten Verbindungselement (1) mit Schraube (40),
b. Ausrichten (b) der mindestens einen Öffnung des ersten Bauteils (3) mit darin angeordnetem Verbindungselement (1) mit mindestens einem Befestigungsbereich des zweiten Bauteils (5), wobei der Befestigungsbereich ein Innengewinde bereitstellt, das zu einem Außengewinde der Schraube (40) des Verbindungselements (1) passt, und
c. Einschrauben (c) der Schraube (40) in das Innengewinde des Befestigungsbereichs.

11. Das Verbindungsverfahren gemäß Patentanspruch 10, wobei die Schritte voll automatisiert ausgeführt werden.

12. Ein Herstellungsverfahren für ein Verbindungselement (1) gemäß einem der vorhergehenden Patentansprüche 1 bis 6, das die Schritte aufweist:
a. Bereitstellen (i) einer Außenhülse (10) die aufweist:
a. einen elastischen Außenkörper mit einem hülsenförmigen Schaft (12), der einen Befestigungsflansch (14) an einem ersten axialen Ende und eine zu einer Stauchwulst (18) faltbare hohlzylindrische Faltzone (16) benachbart zu einem zweiten axialen Ende aufweist, so dass ein erste Bauteil (3) zwischen dem Befestigungsflansch (14) und der Stauchwulst (18) abstützbar ist,
b. einen ersten Innendurchmesser im Bereich des Befestigungsflanschs (14) und einen zweiten Innendurchmesser im Bereich der hohlzylindrischen Faltzone (16), wobei der erste Innendurchmesser größer ist als der zweite Innendurchmesser und ein zweites Bauteil (5) benachbart zum zweiten axialen Ende befestigbar ist, und Anordnen einer Distanzhülse (30) darin benachbart zu einem zweiten axialen Ende der Außenhülse (10),
b. Einstecken (ii) einer Schraube (40) mit Toleranzausgleichsscheibe (42) in die Außenhülse (10) und Distanzhülse (30), so dass ein Kopf der Schraube (40) sowie die Toleranzausgleichsscheibe (42) benachbart zum ersten axialen Ende der Außenhülse (10) angeordnet sind, sowie
c. Anordnen (iii) einer Haltescheibe (50) benachbart zum ersten axialen Ende, so dass die Toleranzausgleichsscheibe (42) in axialer Richtung gehalten wird.

13. Das Herstellungsverfahren gemäß Patentanspruch 12, das vor dem Einstecken der Schraube (40) die weiteren Schritte aufweist:
d. Anordnen (iv) der Toleranzausgleichsscheibe (42) auf der Schraube (40) und danach
e. Anordnen (v) einer Sicherungsbuchse (44) auf dem Schaft, so dass die Toleranzausgleichsscheibe (42) zwischen Kopf und Sicherungsbuchse (44) gehalten wird.

14. Das Herstellungsverfahren gemäß Patentanspruch 12, wobei der Schritt des Bereitstellens der Außenhülse (10) die Schritte aufweist:
a. Bereitstellen (I) einer Gussform, insbesondere einer Spritzgussform, die einen Hohlraum aufweist, der komplementär zur auszubildenden Außenhülse (10) ausgebildet ist,
b. Gießen (II), insbesondere Spritzgießen, eines elastischen Kunststoffs, insbesondere eines Elastomers, in den Hohlraum und
c. Entnehmen (III) der geformten Außenhülse (10) aus der Gussform nach dem Aushärten des Kunststoffs.

15. Das Herstellungsverfahren gemäß Patentanspruch 14, das den weiteren Schritt aufweist:
d. Bereitstellen (IV) einer Distanzhülse (30) in der Gussform vor dem Gießen, so dass die Distanzhülse (30) umgossen wird, oder
e. Einstecken (V) der Distanzhülse (30) nach dem Entnehmen der Außenhülse (10) aus der Gussform.

## Claims

1. A connecting element (1) without female thread with damping function with which at least a first component (3) and a second component (5) are connectable by means of a screw connection, which comprises the features:
a. an outer sleeve (10) which comprises:
a. an elastic outer body with a sleeve-like shaft (12) having a fastening flange (14) at a first axial end and, adjacent to a second axial end, a hollow-cylindrical folding zone (16) which is foldable to form a compression bead (18) so that a first component (3) is supportable between the fastening flange (14) and the compression bead (18),
b. a first inner diameter in the portion of the fastening flange (14) and a second inner diameter in the portion of the hollow-cylindrical folding zone (16), wherein the first inner diameter is larger than the second inner diameter and a second component (5) is attachable adjacent to a second axial end,
b. a spacer sleeve (30) with a third inner diameter that is arranged in the outer sleeve (10) adjacent to the second axial end,
c. a screw (40) with a first outer diameter, wherein the first outer diameter is smaller than the third inner diameter of the spacer sleeve (30), so that the screw (40) is arranged in the outer sleeve (10) with a radial play and that the second component is fixable by means of the screw (40) adjacent to the second axial end of the outer sleeve (10) of the connecting element (1), as well as
d. a tolerance compensation disc (42) arranged on a shaft of the screw (40), having a second outer diameter that is smaller than the first inner diameter of the outer sleeve (10) so that the tolerance compensation disc (42) is arranged with a radial play in the outer sleeve (10).

2. The connecting element (1) according to claim 1, where the outer sleeve (10) comprises a plurality of preferably evenly spaced locking notches (20) at a radial outside, so that the outer sleeve (10) is fixable in a first opening in the first component (3) such, that the first component (3) is arrangeable between the fastening flange (14) and the plurality of locking notches (20) and/or wherein the outer sleeve (10) comprises at least a first fastening feature (22) in the portion of the hollow-cylindrical folding zone (16) adjacent to a second axial end at a radial inside, the fastening feature (22) interacting with a corresponding second fastening feature (32) of the spacer sleeve (30).

3. The connecting element (1) according to one of the claims 1 or 2, which furthermore comprises a holding disc (50), the inner diameter of which is smaller than the outer diameter of the tolerance compensation disc (42) and the radial outer portion of which engages a holding feature (26) at the radial inside of the outer sleeve (10) adjacent to the first axial end, so that the tolerance compensation disc (42) is arranged in the outer sleeve (10) with a radial play and is held in axial direction due to the holding disc (50).

4. The connecting element (1) according to one of the claims 1 to 3, the screw (40) of which comprises a securing bush (44) on the shaft, axially spaced with respect to a head of the screw (40), so that the tolerance compensation disc (42) is held between the head and the securing bush (44).

5. The connecting element (1) according to claim 4, where the distance between head and securing bush (44) corresponds to a maximum protrusion of the screw (40) beyond the second axial end of the outer sleeve (10), so that when the screw (40) is flush with the second axial end of the outer sleeve (10), the securing bush (44) abuts the tolerance compensation disc (42).

6. The connecting element (1) according to one of the preceding claims 1 to 5, where a) the outer sleeve (10) and the holding disc (50) are made of plastic material and/or where b) the distance sleeve (30), the screw (40) and the tolerance compensation disc (42) consist of metal, particularly of steel.

7. A first component (3) with at least one opening and a connecting element (1) according to one of the claims 1 to 6 arranged in there.

8. A connection of a first component (3) with a second component (5) by means of a connecting element (1) according to one of the claims 1 to 6, wherein the second component (5) comprises a fastening portion with inner thread into which the screw (40) is screwed in.

9. A connection method of a first component (3) with a second component (5) by means of a connecting element (1) according to one of the claims 1 to 6, which comprises the steps:
a. providing (A) the first component (3) with an outer sleeve (10) of the connecting element (1) arranged in a first opening of the first component (3),
b. aligning (B) of the at least one opening of the first component (3) with outer sleeve (10) of the connecting element (1) arranged in there with at least one fastening portion of the second component (5), wherein the fastening portion provides an inner thread which matches an outer thread of the screw (40) of the connecting element (1), and
c. screwing (C) the screw (40) into the inner thread of the fastening portion.

10. A connection method of a first component (3) with a second component (5) by means of a connecting element (1) according to one of the claims 1 to 6, wherein the connecting element (1) furthermore includes a holding disc (50), the inner diameter of which is smaller than the outer diameter of the tolerance compensation disc (42) and the radial outer portion is in engagement with a holding feature (26) at the radial inside of the outer sleeve (10) adjacent to the first axial end, so that the tolerance compensation disc (42) is arranged in the outer sleeve (10) with a radial play and is held in axial direction due to the holding disc (50), and the screw (40) comprises a securing bush (44) on the shaft, axially spaced with respect to a head of the screw (40), so that the tolerance compensation disc (42) is held between the head and the securing bush (44), and which comprises the steps:
a. providing (a) the first component (3) with a connecting element (1) with screw (40) arranged in a first opening of the first component (3),
b. aligning (b) the at least one opening of the first component (3) with connecting element (1) arranged in there with at least one fastening portion of the second component (5), wherein the fastening portion provides an inner thread matching an outer thread of the screw (40) of the connecting element (1), and
c. screwing (c) the screw (40) into the inner thread of the fastening portion.

11. The connection method according to claim 10, wherein the steps are carried out in a completely automated way.

12. A manufacturing method for a connecting element (1) according to one of the preceding claims 1 to 6, comprising the steps:
a. providing (i) an outer sleeve (10) comprising:
a. an elastic outer body with a sleeve-like shaft (12) having a fastening flange (14) at a first axial end and, adjacent to a second axial end, a hollow-cylindrical folding zone (16) which is foldable to form a compression bead (18) so that a first component (3) is supportable between the fastening flange (14) and the compression bead (18),
b. a first inner diameter in the portion of the fastening flange (14) and a second inner diameter in the portion of the hollow-cylindrical folding zone (16), wherein the first inner diameter is larger than the second inner diameter and a second component (5) is attachable adjacent to a second axial end, and arranging a distance sleeve (30) in there adjacent to a second axial end of the outer sleeve (10),
b. plugging (ii) a screw (40) with tolerance compensation disc (42) into the outer sleeve (10) and distance sleeve (30) so that a head of the screw (40) as well as the tolerance compensation disc (42) are arranged adjacent to a first axial end of the outer sleeve (10), as well as
c. arranging (iii) a holding disc (50) adjacent to the first axial end so that the tolerance compensation disc (42) is held in axial direction.

13. The manufacturing method according to claim 12 which includes the following steps before plugging-in the screw (40):
d. arranging (iv) the tolerance compensation disc (42) on the screw (40) and after that
e. arranging (v) a securing bush (44) on the shaft, so that the tolerance compensation disc (42) is held between head and securing bush (44).

14. The manufacturing method according to claim 12, wherein the step of providing the outer sleeve (10) comprises the steps:
a. providing (I) a mold, in particular an injection mold, which comprises a cavity that is configured complimentary with respect to the outer sleeve (10) to be formed,
b. molding (II), in particular injection molding, an elastic plastic material, in particular an elastomer, into the cavity and
c. removing (III) the formed outer sleeve (10) from the mold after the plastic material has cured.

15. The manufacturing method according to claim 14, which includes the further step:
d. providing (IV) a spacer sleeve (30) in the mold before molding so that the spacer sleeve (30) is overmolded, or
e. plugging in (V) the spacer sleeve (30) after removing the outer sleeve (10) from the mold.

## Revendications

1. Raccord (1) sans filetage femelle avec une fonction d'amortissement, avec lequel au moins un premier composant (3) et un deuxième composant (5) peuvent être raccordés par un raccord vissé, présentant les caractéristiques suivantes :
a. une douille extérieure (10) présentant :
a. un corps extérieur élastique doté d'un arbre en forme de douille (12), lequel présente une bride de fixation (14) à une première extrémité axiale et une zone de pliage cylindrique creuse (16) pliable en un bourrelet de refoulement (18) adjacente à une deuxième extrémité axiale, de sorte qu'un premier composant (3) peut s'appuyer entre la bride de fixation (14) et le bourrelet de refoulement (18),
b. un premier diamètre intérieur dans la région de la bride de fixation (14) et un deuxième diamètre intérieur dans la région de la zone de pliage cylindrique creuse (16), dans lequel le premier diamètre intérieur est plus grand que le deuxième diamètre intérieur et un deuxième composant (5) peut être fixé de façon adjacente à la deuxième extrémité axiale,
b. une douille d'espacement (30) avec un troisième diamètre intérieur, disposée de façon adjacente à la deuxième extrémité axiale dans la douille extérieure (10),
c. une vis (40) avec un premier diamètre extérieur, dans lequel le premier diamètre extérieur est plus petit que le troisième diamètre intérieur de la douille d'espacement (30), de sorte que la vis (40) est disposée dans la douille extérieure (10) avec un jeu radial et que le deuxième composant peut être fixé au moyen de la vis (40) de façon adjacente à la deuxième extrémité axiale de la douille extérieure (10) du raccord (1), et
d. un disque de compensation de tolérance (42) disposée sur un arbre de la vis (40), lequel présente un deuxième diamètre extérieur, lequel est plus petit que le premier diamètre intérieur de la douille extérieure (10), de sorte que le disque de compensation de tolérance (42) est disposé dans la douille extérieure (10) avec un jeu radial.

2. Raccord (1) selon la revendication 1, dans lequel la douille extérieure (10) présente une pluralité d'ergots d'encliquetage (20) espacés de préférence de façon régulière sur un côté extérieur radial, de sorte que la douille extérieure (10) peut être fixée de telle façon dans une première ouverture dans le premier composant (3), que le premier composant (3) peut être disposé entre la bride de fixation (14) et la pluralité d'ergots d'encliquetage (20) et/ou dans lequel la douille extérieure (10) présente au moins un premier élément de fixation (22) adjacent à une deuxième extrémité axiale sur un côté intérieur radial dans la région de la zone de pliage cylindrique creuse (16), lequel coopère avec un deuxième élément de fixation correspondant (32) de la douille d'espacement (30).

3. Raccord (1) selon l'une des revendications 1 ou 2, lequel présente en outre un disque de maintien (50), dont le diamètre intérieur est plus petit que le diamètre extérieur du disque de compensation de tolérance (42) et dont la région extérieure radiale est en prise avec un élément de maintien (26) sur le côté intérieur radial de la douille extérieure (10) adjacent à la première extrémité axiale, de sorte que le disque de compensation de tolérance (42) est disposé dans la douille extérieure (10) avec un jeu radial et maintenu dans la direction axiale du fait du disque de maintien (50).

4. Raccord (1) selon l'une des revendications 1 à 3, dont la vis (40) présente un manchon de blocage (44) sur l'arbre avec une distance axiale par rapport à une tête de la vis (40), de sorte que le disque de compensation de tolérance (42) est maintenu entre la tête et le manchon de blocage (44).

5. Raccord (1) selon la revendication 4, dans lequel la distance entre la tête et le manchon de blocage (44) correspond à une saillie maximale de la vis (40) au-delà de la deuxième extrémité axiale de la douille extérieure (10), de sorte que le manchon de blocage (44) s'applique sur le disque de compensation de tolérance (42) lorsque la vis (40) s'ajuste en affleurement avec la deuxième extrémité axiale de la douille extérieure (10).

6. Raccord (1) selon l'une des revendications précédentes 1 à 5, dans lequel a) la douille extérieure (10) et le disque de maintien (50) sont réalisés en plastique et/ou dans lequel b) la douille d'espacement (30), la vis (40) et le disque de compensation de tolérance (42) sont réalisés en métal, en particulier d'acier.

7. Premier composant (3) doté d'au moins une ouverture et d'un raccord (1) selon l'une des revendications 1 à 6 disposé dans celui-ci.

8. Raccordement d'un premier composant (3) avec un deuxième composant (5) au moyen d'un raccord (1) selon l'une des revendications 1 à 6, dans lequel le deuxième composant (5) présente une région de fixation dotée d'un filetage intérieur, dans lequel la vis (40) est vissée.

9. Procédé de raccordement d'un premier composant (3) avec un deuxième composant (5) au moyen d'un raccord (1) selon l'une des revendications 1 à 6, comportant les étapes suivantes :
a. mise à disposition (A) du premier composant (3) avec une douille extérieure (10) du raccord (1) disposée dans une première ouverture du premier composant (3),
b. orientation (B) de l'au moins une ouverture du premier composant (3) avec la douille extérieure (10) du raccord (1) disposée dans celle-ci avec au moins une région de fixation du deuxième composant (5), dans lequel la région de fixation fournit un filetage intérieur adapté à un filetage extérieur de la vis (40) du raccord (1), et
c. vissage (C) de la vis (40) dans le filetage intérieur de la région de fixation.

10. Procédé de raccordement d'un premier composant (3) avec un deuxième composant (5) au moyen d'un raccord (1) selon l'une des revendications 1 à 6, dans lequel le raccord (1) présente en outre un disque de maintien (50), dont le diamètre intérieur est plus petit que le diamètre extérieur du disque de compensation de tolérance (42) et dont la région extérieure radiale est en prise avec un élément de maintien (26) sur le côté intérieur radial de la douille extérieure (10) adjacent à la première extrémité axiale, de sorte que le disque de compensation de tolérance (42) est disposé dans la douille extérieure (10) avec un jeu radial et maintenu dans la direction axiale du fait du disque de maintien (50), et la vis (40) présente un manchon de blocage (44) sur l'arbre avec une distance axiale par rapport à une tête de la vis (40), de sorte que le disque de compensation de tolérance (42) est maintenu entre la tête et le manchon de blocage (44), et comportant les étapes suivantes :
a. mise à disposition (a) du premier composant (3) avec un raccord (1) disposé dans une première ouverture du premier composant (3) avec la vis (40),
b. orientation (b) de l'au moins une ouverture du premier composant (3) avec le raccord (1) disposé dans celle-ci avec au moins une région de fixation du deuxième composant (5), dans lequel la région de fixation fournit un filetage intérieur adapté à un filetage extérieur de la vis (40) du raccord (1), et
c. vissage (c) de la vis (40) dans le filetage intérieur de la région de fixation.

11. Procédé de raccordement selon la revendication 10, dans lequel les étapes sont exécutées de façon entièrement automatisée.

12. Procédé de fabrication pour un raccord (1) selon l'une des revendications précédentes 1 à 6, présentant les étapes suivantes :
a. mise à disposition (i) d'une douille extérieure (10) présentant :
a. un corps extérieur élastique doté d'un arbre en forme de douille (12), lequel présente une bride de fixation (14) à une première extrémité axiale et une zone de pliage cylindrique creuse (16) pliable en un bourrelet de refoulement (18) adjacente à une deuxième extrémité axiale, de sorte qu'un premier composant (3) peut s'appuyer entre la bride de fixation (14) et le bourrelet de refoulement (18),
b. un premier diamètre intérieur dans la région de la bride de fixation (14) et un deuxième diamètre intérieur dans la région de la zone de pliage cylindrique creuse (16), dans lequel le premier diamètre intérieur est plus grand que le deuxième diamètre intérieur et un deuxième composant (5) peut être fixé de façon adjacente à la deuxième extrémité axiale, et agencement d'une douille d'espacement (30) dans celle-ci de façon adjacente à une deuxième extrémité axiale de la douille extérieure (10),
b. insertion (ii) d'une vis (40) avec le disque de compensation de tolérance (42) dans la douille extérieure (10) et la douille d'espacement (30), de telle façon qu'une tête de la vis (40) ainsi que le disque de compensation de tolérance (42) sont disposés de façon adjacente à la première extrémité axiale de la douille extérieure (10), et
c. agencement (iii) d'un disque de maintien (50) de façon adjacente à la première extrémité axiale, de manière à maintenir le disque de compensation de tolérance (42) dans la direction axiale.

13. Procédé de fabrication selon la revendication 12, lequel présente l'étape supplémentaire suivante avant l'insertion de la vis (40) :
d. agencement (iv) du disque de compensation de tolérance (42) sur la vis (40) et ensuite
e. agencement (v) d'un manchon de blocage (44) sur l'arbre, de manière à maintenir le disque de compensation de tolérance (42) entre la tête et le manchon de blocage (44).

14. Procédé de fabrication selon la revendication 12,
dans lequel l'étape de mise à disposition de la douille extérieure (10) présente les étapes suivantes :
a. mise à disposition (I) d'un moule, en particulier d'un moule de coulage par injection, lequel présente un espace creux formé de façon complémentaire à la douille extérieure (10) à former,
b. coulage (II), en particulier coulage par injection, d'une matière plastique élastique, en particulier d'un élastomère, dans l'espace creux et
c. retrait (III) de la douille extérieure (10) moulée hors du moule de coulage après le durcissement de la matière plastique.

15. Procédé de fabrication selon la revendication 14, lequel présente l'étape supplémentaire suivante :
d. mise à disposition (IV) d'une douille d'espacement (30) dans le moule de coulage avant le coulage, de manière à surmouler la douille d'espacement (30), ou
e. insertion (V) de la douille d'espacement (30) après le retrait de la douille extérieure (10) hors du moule de coulage.
